# EUROPÄISCHE PATENTANMELDUNG

(11) **EP 0 562 447 A1**
(43) Veröffentlichungstag der Anmeldung: **29.09.1993**
(21) Anmeldenummer: 93104412.7
(22) Anmeldetag: 18.03.1993
(51) Int. Cl.: B32B 11/04, E04D 5/10, E02D 31/00

(54) **Dichtungsbahn**

(30) Priorität: 23.03.1992 DE 4209342
(71) Anmelder: HOECHST AKTIENGESELLSCHAFT, D-65926 Frankfurt am Main (DE)
(72) Erfinder: Ernst, Gottlieb, W-6200 Wiesbaden (DE); Gribbin, John Derek, W-6229 Schlangenbad 2 (DE)

(57) **Zusammenfassung**

Es wird eine Dichtungsbahn enthaltend eine Trägerschicht, die beidseitig mit einer bituminösen Beschichtung versehen ist, beschrieben. Die Trägerschicht ist eine Folie aus thermoplastischem Kunststoff, die an zahlreichen Stellen Löcher aufweist.

Es wird auch ein Verfahren zur Herstellung der Dichtungsbahn beschrieben.

## Beschreibung

Die vorliegende Erfindung betrifft eine Dichtungsbahn enthaltend eine Trägerschicht, die beidseitig mit einer bituminösen Beschichtung überzogen ist.

Dichtungsbahnen werden zur Abdeckung von Bauwerken verschiedenster Art verwendet, insbesondere zur Abdeckung von Flachdachkonstruktionen oder unterirdischen Baukonstruktionen wie z. B. Tunnels und ähnlichem sowie als Unterspannbahnen bei Satteldächern.

Üblicherweise bestehen bituminöse Dichtungsbahnen aus einem Trägermaterial, das beidseitig mit Bitumen beschichtet ist, wobei für hochwertige Bahnen in der Regel oxidiertes oder modifiziertes Bitumen verwendet wird, dessen Viskositäts- und Elastizitätsverhalten durch Beimengung von polymeren Additiven plastomerer oder elastomerer Natur modifiziert ist.

Als Trägermaterial bzw. Verfestigungseinlage für die bituminöse Dachbahn werden gelege-, gewebe- oder vliesartige Materialien verwendet, insbesondere Vliesstoffe aus Polyesterfasern oder -fäden, die in geeigneter Weise verfestigt sind. Vliesstoffe sind deshalb bevorzugt, weil sie im Vergleich zu Geweben gute elastische Eigenschaften aufweisen, die nicht richtungsgebunden sind.

Die Trägerschicht bildet mit den beidseitig aufgetragenen Bitumenschichten einen dreilagigen Verbund, der gewissen Anforderungen genügen muß. Zum einen muß die Bitumenschicht fest auf dem Trägermaterial haften, da abgelöste Stellen leicht undicht werden können. Zum anderen muß der Verbund gute mechanische Eigenschaften aufweisen, insbesondere eine gute mechanische Festigkeit und gleichzeitig eine hervorragende Elastizität, die ein problemloses Verlegen über und um nicht ebene Partien des Daches herum ermöglicht.

Im Stand der Technik wurden verschiedene Trägermaterialien vorgeschlagen, welche einzelne Verbesserungen im Hinblick auf die gewünschten Eigenschaften aufweisen, die aber nicht allen Anforderungen gleichzeitig genügen.

Die DE-A-31 45 266 beschreibt eine hochfeste elastische Dach- und Abdichtungsbahn aus wenigstens einer bitumengetränkten Vliesstoffschicht aus organischem Material, gegebenenfalls wenigstens einer weiteren Vlies- bzw. Vliesstoffschicht aus anorganischem Material und einer beidseitigen Bitumenbeschichtung, wobei das Bitumen gegebenenfalls durch Zusatz von Modifikatoren, z. B. Plastomeren mit hinreichend niedrigen Glasumwandlungspunkten, elastisch gemacht ist. Diese Dach- und Abdichtungsbahn weist ein elastisches Verhalten auf, das ein Überbrücken von Rissen auch bei niedrigen Temperaturen ermöglicht, so daß sie in einem großen Temperaturintervall komplikationslos verlegt werden kann, wobei es auch nach langen Liegezeiten bei problematischen Objekten, z. B. Flachdächern, nicht zu Rissen und Undichtigkeiten kommen soll. Die Haftung zwischen der Bitumenschicht und dem Trägervlies ist jedoch, insbesondere bei hohen Temperaturen, die bei starker Sonneneinstrahlung erreicht werden, mangelhaft.

Die EP-A-0 410 275 beschreibt eine Dichtungsbahn mit einer Sperrschicht für Wasser und Wasserdampf. Sie enthält wenigstens eine biaxial streckorientierte und hitzefixierte Folie aus thermoplastischem Kunststoff, die wenigstens einseitig metallisiert ist. Diese Dichtungsbahn verhindert das Eindringen von Feuchtigkeit in Wärmedämmschichten bei Bauwerken besonders effektiv, weil die erfindungsgemäße Trägerfolie durch die Streckorientierung eine besonders gute Reißfestigkeit besitzt und weil sie infolge der Hitzefixierung eine ausreichend hohe Dimensionsstabilität unter der Einwirkung üblicher witterungsbedingter Temperaturunterschiede über einen Zeitraum von mehreren Jahren gewährleistet. Auch bei dieser Ausführungsform ist die Haftung zwischen der Bitumen- und der Trägerschicht noch verbesserungswürdig. Außerdem sind diese Dichtungsbahnen aufgrund der zusätzlichen Metallbeschichtungen der Trägerfolie wesentlich teurer als herkömmliche Dichtungsbahnen und lohnen sich nur dann, wenn besonders hohe Wasser- und Wasserdampfundurchlässigkeiten gefordert sind.

Die EP-A-0 233 488 beschreibt eine Dachdichtungsbahn aus einer gelege-, gewebe- oder vliesartigen Trägerschicht, die beidseitig mit einer bituminösen Beschichtung überzogen ist, welche auf ihrer äußeren Oberfläche mit einer Abdeckfolie aus biaxial streckorientiertem Polypropylen versehen ist und die an zahlreichen Stellen Perforationslöcher aufweist. Die außen aufgebrachte Lochfolie ersetzt die übliche Abstreuung mit Talkum, Sand oder Schiefer und verhindert ein Verkleben der Bitumenlagen aufeinander, wenn die Bahn aufgerollt ist.

Die DE-A-34 05 109 beschreibt eine hochelastische bituminöse Dachbahn, die eine Verstärkungseinlage aus einem beidseitig mit Bitumen beschichteten Polyester-Spinnvliesstoff enthält. Der Polyester-Spinnvliesstoff ist über die gesamte Fläche mit Poren durchsetzt, an deren Rändern die Faserstruktur des Vliesstoffs kragenförmig verdichtet ist. Zur Herstellung der Dachbahn wird der Polyester-Spinnvliesstoff mit beheizten konischen Nadeln perforiert und dann mit flüssigem Bitumen getränkt und beschichtet. Diese Dichtungsbahn zeichnet sich durch eine einwandfreie Haftung des Bitumens trotz der auftretenden Scherkräfte durch die unterschiedlichen Materialeigenschaften (elastisches Verhalten) von Bitumen und Spinnvlies aus. Das Verfahren zur Perforierung ist jedoch relativ kompliziert und aufwendig, da das Trägervlies nicht beschädigt, d. h. dessen Struktur nicht zerstört werden soll, um die guten mechanischen Eigenschaften des Verbunds zu erhalten. Außerdem sind Spinnvliesstoffe als Trägermaterial generell mit bestimmten Nachteilen behaftet. Die erhaltenen Dichtungsbahnen sind relativ dick und steif und bieten nicht die gewünschte Flexibilität, da die eingelegten Spinnvliese eine gewisse Mindestdicke von 400 µm aufweisen. Dünnere Spinnvliese sind zwar grundsätzlich erhältlich, aber unverhältnismäßig teuer.

Die verschiedenen im Stand der Technik beschriebenen Versuche, die Eigenschaften der Dichtungsbahnen zu verbessern, zeigen, daß trotz der bekannten Lösungen ein Bedürfnis nach verbesserten Entwicklungen besteht.

Der Erfindung lag daher die Aufgabe zugrunde, die vorstehend beschriebenen Nachteile zu vermeiden. Es soll eine Dichtungsbahn zur Verfügung gestellt werden, die eine ausgezeichnete Haftung zwischen der Trägerschicht und dem Bitumen aufweist und gleichzeitig eine gute mechanische Festigkeit und ausgezeichnete elastische Eigenschaften und eine hervorragende Flexibilität aufweist. Trotz Erfüllung dieser Erfordernisse soll die Dichtungsbahn einfach und unaufwendig und somit besonders preisgünstig herzustellen sein.

Diese Aufgabe wird gelöst durch eine Dichtungsbahn der eingangs genannten Gattung, deren kennzeichnenden Merkmale darin bestehen, daß die Trägerschicht eine Folie aus thermoplastischem Kunststoff ist, die an zahlreichen Stellen Löcher aufweist.

Als thermoplastischer Kunststoff sind prinzipiell alle Kunststoffe geeignet, die sich zu Folien verarbeiten lassen. Beispiele hierfür sind Polyolefine, Polystyrol, Polyamide, Polyvinylchlorid oder Polyester. Bevorzugt im Rahmen der Erfindung sind Polyolefine, insbesondere Polypropylen und Polyester, insbesondere Polyethylenterephthalat. Die Abdeckfolien können einen relativ hohen Anteil an Regenerat enthalten, gegebenenfalls auch zu 100 % aus Regenerat bestehen. Unter Regenerat soll im Rahmen der vorliegenden Erfindung Folienverschnittmaterial zu verstehen sein, welches bei der Folienherstellung anfällt und welches dem Herstellungsprozeß zurückgeführt wird. Dem Folienrohstoff können zusätzlich die üblichen Zusatzstoffe wie beispielsweise Gleitmittel, Antiblockmittel, Antistatika, Antioxidantien, Neutralisationsmittel und ähnliche in den üblichen Mengen zugefügt werden.

Grundsätzlich kommen einschichtige und mehrschichtige Ausführungsformen der Folie als Trägerschicht in Frage, wobei einschichtige und zwei- und dreischichtige bevorzugt sind. Mehrschichtige Trägerfolien werden nach bekannten Coextrusionsverfahren oder durch Kaschierung einzelner Lagen hergestellt.

Die Dicke der eingesetzten Trägerfolie kann innerhalb weiter Grenzen variieren aber sie sollte im Hinblick auf die gewünschte Flexibilität und Elastizität der fertigen Dachbahn 500 µm nicht überschreiten. Bevorzugt liegt die Foliendicke im Bereich von 1 bis 200 µm, wobei 20 bis 80 µm besonders bevorzugt sind.

Um zusätzliche Eigenschaften im Hinblick auf spezielle Anforderungen zu verbessern, kann die Trägerfolie auf der oder den Oberfläche/n beschichtet werden. Gegebenenfalls kann eine Corona- oder Flammbehandlung vorgenommen werden.

Es ist bevorzugt, die Folie zur Verbesserung der mechanischen Eigenschaften einer biaxialen Streckung mit anschließender Thermofixierung zu unterziehen.

Zur Herstellung der Trägerfolien werden die Folienrohstoffe in einem Extruder aufgeschmolzen, die Schmelze durch eine Breitschlitzdüse gepreßt und zu einer Vorfolie abgekühlt. Die Vorfolie wird bevorzugt in zwei senkrecht zueinander verlaufenden Richtungen streckorientiert, bevorzugt erst längs- und dann quergestreckt, und anschließend thermofixiert. Das Streckverhältnis liegt im Bereich von 5 bis 60 und richtet sich nach dem eingesetzten Folientyp.

Die Folie wird zur Herstellung der erfindungsgemäßen Trägerfolie anschließend perforiert. Grundsätzlich sind hierfür alle bekannten Verfahren geeignet, durch welche die Folie erfindungsgemäß mit Löchern versehen werden kann, insbesondere Stanzverfahren, Nadelperforationen oder Flammperforationen.

Es hat sich gezeigt, daß Flammperforation ein besonders geeignetes Perforationsverfahren ist. Das Verfahren der Flammperforation ist bekannt und besteht darin, daß die Folie über eine mit Perforationslöchern versehene und von Kühlmedium durchströmte Walze geführt wird. Gleichzeitig wird die Folie innerhalb des Umschlingungsbereichs von der der perforierten Kühlwalze abgewandten Seite mit einer Flamme beaufschlagt. Im Bereich der Perforationslöcher schmilzt die nicht mit der gekühlten Walzenoberfläche in Kontakt stehende Folie, und es entstehen die Perforationslöcher in der Folie.

Die in der Trägerfolie vorhandenen Perforationslöcher haben einen mittleren Durchmesser im Bereich von 0,1 bis 20 mm, bevorzugt 1 bis 5 mm. Die Anzahl der Perforationslöcher pro Flächeneinheit in der Trägerfolie soll so groß sein, daß von der gesamten Folienfläche 5 bis 60 % auf die Löcher entfallen.

Der Lochabstand untereinander kann ein Vielfaches des Lochdurchmessers sein, jedoch liegt er bevorzugt im Bereich des 0,5- bis 10fachen des mittleren Lochdurchmessers.

Die so hergestellten und mit Löchern versehenen Trägerfolien werden abschliessend zur Fertigung der Dachbahnen beidseitig mit Bitumen beschichtet.

Die Bitumenbeschichtung besteht aus unmodifiziertem, oxidiertem oder geblasenem Bitumen. Zweckmäßig werden homogenisierte Gemische aus Bitumen mit anderen Polymeren verwendet. Als Modifizierungskomponente kann z. B. ataktisches Polypropylen oder ein Gemisch aus allen Stereoisomeren von Polypropylen dienen. Zur Modifizierung werden auch Elastomere verwendet. Zweckmäßig ist ein Block-Copolyester von Styrol-Butadien und Styrol. Der Anteil der modifizierenden Komponente an der modifizierten Bitumenmasse beträgt 5 bis 40 Gew.-%, vorzugsweise 10 bis 20 Gew.-%, bezogen auf das Gesamtgewicht der Bitumenmasse.

Die erfindungsgemäßen Dichtungsbahnen zeichnen sich durch eine hervorragende Haftung zwischen der Bitumen- und der Trägerschicht aus, die auch bei hohen Temperaturen gewährleistet ist. Gleichzeitig weist die Dichtungsbahn sehr gute mechanische Eigenschaften auf.

Darüber hinaus ist sie trotz des hohen Qualitätsstandards einfach und besonders preiswert herzustellen.

## Patentansprüche

1. Dichtungsbahn enthaltend eine Trägerschicht, die beidseitig mit einer bituminösen Beschichtung versehen ist, dadurch gekennzeichnet, daß die Trägerschicht eine Folie aus thermoplastischem Kunststoff ist, die an zahlreichen Stellen Löcher aufweist.

2. Dichtungsbahn nach Anspruch 1, dadurch gekennzeichnet, daß die Trägerfolie eine Dicke im Bereich von 1 bis 500 µm, bevorzugt 20 bis 80 µm, aufweist.

3. Dichtungsbahn nach Anspruch 1 und/oder 2, dadurch gekennzeichnet, daß die Perforationslöcher der Trägerfolie einen mittleren Durchmesser im Bereich von 0,1 bis 20 mm, bevorzugt 1 bis 5 mm, besitzen.

4. Dichtungsbahn nach einem oder mehreren der Ansprüche 1 bis 3, dadurch gekennzeichnet, daß die Anzahl der Perforationslöcher pro Flächeneinheit in der Trägerfolie einer solchen Menge entspricht, daß 5 bis 60 % der Folienoberfläche auf die Perforationslöcher entfallen.

5. Dichtungsbahn nach einem oder mehreren der Ansprüche 1 bis 4, dadurch gekennzeichnet, daß die Perforationslöcher in der Trägerfolie durch Flammperforation entstanden sind.

6. Dichtungsbahn nach einem oder mehreren der Ansprüche 1 bis 5, dadurch gekennzeichnet, daß der thermoplastische Kunststoff Polyester, bevorzugt Polyethylenterephthalat, ist.

7. Dichtungsbahn nach einem oder mehreren der Ansprüche 1 bis 6, dadurch gekennzeichnet, daß die Trägerfolie biaxial streckorientiert und thermofixiert ist.

8. Verfahren zur Herstellung einer Dichtungsbahn nach einem oder mehreren der Ansprüche 1 bis 7, nach dem eine Trägerschicht beidseitig mit bituminösen Beschichtungen versehen wird, dadurch gekennzeichnet, daß die Trägerschicht eine Folie aus thermoplastischem Kunststoff ist, die an zahlreichen Stellen Löcher aufweist.

9. Verfahren nach Anspruch 8, dadurch gekennzeichnet, daß die Löcher durch Flammperforation hergestellt werden.

10. Verfahren zum Herstellen einer dauerhaft wetterbeständigen Dachabdeckung, dadurch gekennzeichnet, daß eine Dichtungsbahn nach einem der Ansprüche 1 bis 7 nach dem Flammverfahren verlegt wird.

11. Verfahren zur Herstellung einer dauerhaft wetterbeständigen Dachabdeckung, dadurch gekennzeichnet, daß eine Dichtungsbahn nach einem der Ansprüche 1 bis 7 nach dem Gießverfahren verlegt wird.

12. Verfahren zur Herstellung einer dauerhaft wetterbeständigen Dachabdeckung, dadurch gekennzeichnet, daß eine Dichtungsbahn nach einem der Ansprüche 1 bis 7 nach dem Kaltklebeverfahren verlegt wird.
